# EUROPEAN PATENT APPLICATION

(11) **EP 4 316 261 A1**
(43) Date of publication of application: **07.02.2024**
(21) Application number: 23188961.9
(22) Date of filing: 01.08.2023
(51) Int. Cl.: A23J 3/14, A23J 3/16, A23J 3/22, A23P 30/10, A23P 30/20, A23J 3/18

(54) **PRODUCTION MACHINE**

(30) Priority: 04.08.2022 CN 202222046957 U
(71) Applicant: Lin, Ming-Yi, Taipei City 111 (TW)
(72) Inventor: LIN, Li-Wei, 111 Taipei City (TW)
(74) Representative: 2K Patentanwälte Blasberg Kewitz & Reichel

(57) **Abstract**

A production machine (1) includes a first motor (2), a raw material mixer (3) receiving a mixture of plant-based protein and stirring and mixing materials in the mixture; a raw material storage tank (6) receiving and storing the mixture stirred and mixed by the raw material mixer (3); a vacuum pump (5) evacuating the raw material storage tank (6); a second motor (4) controlling discharging speed of the mixture from the raw material storage tank; a raw material delivery pump (7); a pressure pump (8) receiving and pressurizing the mixture delivered by the raw material delivery pump (7) from the raw material storage tank (6); a heating/cooling device (9) heating the mixture to a preset heating temperature within a preset time period and cooling the mixture to a preset cooling temperature; a fiberizing and cooling mold (10) receiving the cooled mixture and performing an extrusion operation thereon to form fibrous materials; and a forming mold (11) shaping the fibrous materials to form an artificial meat.

## Description

### FIELD OF THE INVENTION

The present disclosure relates to a production machine of artificial meat, and more particularly to a production machine of artificial meat with a pressure pump.

### BACKGROUND OF THE INVENTION

In recent years, people pay more and more attentions to health and focus more on food resources, so plant-based proteins with high protein contents, such as the soybean protein, have attracted worldwide attention as being the substitute for animal-based proteins and the demand thereof is also gradually increased.

All kinds of beans are rich in plant-based proteins. Soybean protein is especially comparable to animal-based proteins except for the low content of sulfur-containing amino acids. Therefore, it is completely feasible to replace animal-based proteins with plant-based proteins through the current technology. For example, the sulfur-containing amino acids that are insufficient in the plant-based proteins can be supplemented through adding synthetic amino acids, and the flavor and taste also can be achieved through adding food favors and spices and/or through cooking techniques.

However, the difficulty now in promoting the plant-based proteins is the price of artificial meat (also called bionic meat, or proteins made by high moisture extrusion) is too high. One of the reasons for the high price is the production machine is expensive and the energy consumption thereof is also high. The current production machine of artificial meat is mainly a twin-screw extruder which is disadvantageous of high energy consumption, large volume and high price. Moreover, the twin-screw extruder also has critical limits on the raw material used and also the moisture content of the raw material, for example, the twin-screw extruder is limited to use the isolated soybean protein as the raw material, which leads to an even higher price for producing the artificial meat. Furthermore, the twin-screw extruder is also unable to produce high moisture products, which accordingly limits the type of artificial meat that can be made.

Therefore, there is a need of providing a production machine of artificial meat for solving the problems above.

### SUMMARY OF THE INVENTION

An object of the present disclosure is to provide a production machine of artificial meat which can solve the problems of high energy consumption, critical limits on the raw material, and unable to produce high moisture products in the conventional twin-screw extruder for artificial meat production.

In accordance with an aspect of the present disclosure, a production machine is provided. The production machine includes a first motor, a raw material mixer, a raw material storage tank, a vacuum pump, a second motor, a raw material delivery pump, a pressure pump, a heating/cooling device, a fiberizing and cooling mold, a forming mold and an outlet. The raw material mixer receives a mixture of plant-based protein and is driven by the first motor to stir and mix materials in the mixture of plant-based protein. The raw material storage tank is communicated with the raw material mixer for receiving and storing the mixture of plant-based protein which is stirred and mixed by the raw material mixer. The vacuum pump is connected to the raw material storage tank for evacuating the raw material storage tank. The second motor is disposed adjacent to the raw material storage tank for controlling a discharging speed of the mixture of plant-based protein from the raw material storage tank. The raw material delivery pump delivers the mixture of plant-based protein from the raw material storage tank. The pressure pump is communicated with the raw material delivery pump for receiving and pressurizing the mixture of plant-based protein from the raw material delivery pump. The heating/cooling device is communicated with the pressure pump for receiving the mixture of plant-based protein, wherein the heating/cooling device heats the mixture of plant-based protein to a preset heating temperature within a preset time period and cools the mixture of plant-based protein to a preset cooling temperature. The fiberizing and cooling mold receives and performs an extrusion operation on the mixture of plant-based protein cooled by the heating/cooling device, so as to form fibrous materials from the mixture of plant-based protein. The forming mold is connected to the fiberizing and cooling mold for receiving the fibrous materials from the fiberizing and cooling mold and shaping the fibrous materials to form an artificial meat. The outlet is connected to the forming mold for outputting the artificial meat.

In an embodiment, a pressure applied by the pressure pump is ranged from 0.1 MPa to 20 MPa.

In an embodiment, the preset time period is ranged from 3 seconds to 10 seconds.

In an embodiment, the preset heating temperature is ranged from 100 °C to 140 °C.

In an embodiment, the preset cooling temperature is ranged from 60 °C to 95 °C.

In an embodiment, the materials in the mixture of plant-based protein comprise a dehulled soybean.

In an embodiment, the raw material delivery pump includes a centrifugal pump, a screw pump or a hydraulic pump.

In an embodiment, the pressure pump includes a gear pump, a rotary lobe pump, a screw pump or a piston pump.

In an embodiment, a size of a discharging hole of the fiberizing and cooling mold is ranged from 50 µm to 1000 µm.

In an embodiment, a ratio of a cross-sectional area of a discharging hole of the fiberizing and cooling mold to a cross-sectional area of a pipeline of the heating/cooling device is ranged from 1:5 to 1:20.

Consequently, the present disclosure provides a production machine of artificial meat which employs the pressure pump. Compared with the conventional production machine which employs the twin-screw extruder, the production machine of the present disclosure is advantageous of less energy consumption, small volume, low requirements on the characteristics of raw materials, and capable of producing high-moisture artificial meat products.

### BRIEF DESCRIPTION OF THE DRAWINGS

The above contents of the present disclosure will become more readily apparent to those ordinarily skilled in the art after reviewing the following detailed description and accompanying drawings, in which:

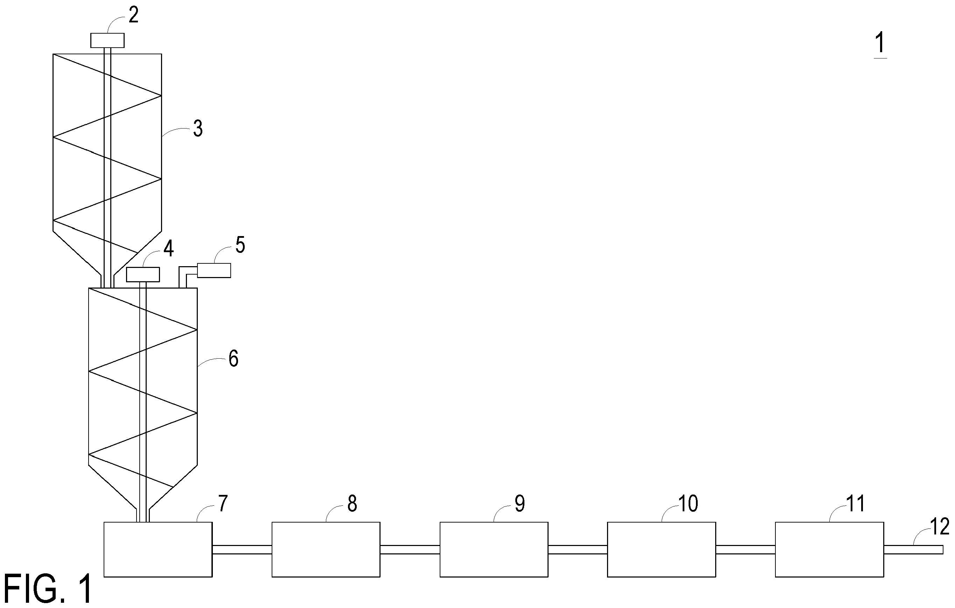

FIG. 1 is a schematic view showing a production machine of artificial meat according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

Please refer to FIG. 1, which is a schematic view showing a production machine of artificial meat according to an embodiment of the present disclosure. As shown, a production machine of artificial meat 1 includes a first motor 2, a raw material mixer 3, a second motor 4, a vacuum pump 5, a raw material storage tank 6, a raw material delivery pump 7, a pressure pump 8, a heating/cooling device 9, a fiberizing and cooling mold 10, a forming mold 11 and an outlet 12.

The raw material mixer 3 is used to receive a mixture of plant-based protein, and is driven by the first motor 2 to stir and mix all materials in the mixture. The materials in the mixture of plant-based protein include finely grounded dehulled soybean, soybean protein powders (such as isolated soybean protein, concentrated soybean protein, low-temperature dehulled soybean meal etc.), other plant-based protein powders (such as protein powders from wheat protein, mung bean protein, pea protein, peanut protein etc.), starches, oil, water, fats, spices, colloids, food flavors and/or animal raw materials, but not limited thereto. In some embodiments, the finely grounded dehulled soybean is grounded to smaller than a 200 mesh size, and the oil content thereof is ranged from 18% to 20 %.

A feeding inlet of the raw material storage tank 6 is communicated with the raw material mixer 3, and a discharging outlet of the raw material storage tank 6 is communicated with the raw material delivery pump 7. The raw material storage tank 6 provides a storage space for receiving and storing the mixture of plant-based protein which is stirred and mixed by the raw material mixer 3. The vacuum pump 5 is connected to the raw material storage tank 6 and is used to evacuate the storage space of the raw material storage tank 6, so as to create a vacuum environment in the raw material storage tank 6.

The second motor 4 is disposed adjacent to the raw material storage tank 6 and is used to control a discharging speed of the mixture of plant-based protein from the raw material storage tank 6.

The raw material delivery pump 7 is communicated with the pressure pump 8 and is used to deliver the mixture of plant-based protein received from the raw material storage tank 6 to the pressure pump 8. The delivery speed of the raw material delivery pump 7 is controlled by the second motor 4 or the pressure pump 8. In some embodiments, the raw material delivery pump 7 includes a centrifugal pump, a screw pump or a hydraulic pump, but not limited thereto.

The pressure pump 8 is communicated with the raw material delivery pump 7 and the heating/cooling device 9 and is used to pressurize the mixture of plant-based protein received from the raw material delivery pump 7. The pressure applied by the pressure pump 8 is ranged from 0.1 MPa to 20 MPa, but not limited thereto. Then, the pressurized mixture of plant-based protein is delivered by the pressure pump 8 to the heating/cooling device 9. In some embodiments, the pressure pump 8 includes a gear pump, a rotary lobe pump, a screw pump or a piston pump, but not limited thereto. The aperture size of the discharging hole (not shown) of the pressure pump 8 is related to the output amount of the artificial meat. The larger the aperture size, the greater the output amount of the artificial meat and the smaller the pressure applied by the pressure pump 8. Oppositely, the smaller the aperture size, the greater the pressure applied by the pressure pump 8 and the less the output amount of the artificial meat. Notably, the range of pressure applied by the pressure pump 8 depends on the ingredients of the materials in the mixture of plant-based protein and the types of artificial meat to be produced, and is not limited thereto.

The heating/cooling device 9 is communicated with the pressure pump 8 and is used to receive the mixture of plant-based protein from the pressure pump 8. The heating/cooling device 9 includes a heating pipeline (not shown) and a cooling pipeline (not shown). In the heating pipeline, a high temperature steam or oil is utilized to heat the mixture of plant-based protein to a preset heating temperature within a preset time period, for example, the preset heating temperature is ranged from 100 °C to 140 °C, and the preset time period is ranged from 3 to 100 seconds. In the cooling pipeline, a cooling water or oil is utilized to cool the mixture to a preset cooling temperature, such as 60 °C to 95 °C. Notably, the ranges of temperature and time period depend on the ingredients of the materials in the mixture of plant-based protein and the types of artificial meat to be produced, and is not limited thereto. In some embodiments, the heating pipeline or the cooling pipeline of the heating/cooling device 9 is further connected to a static mixing pipeline.

The fiberizing and cooling mold 10 is used to receive the mixture of plant-based protein cooled by the heating/cooling device 9 and perform an extrusion operation on the received mixture of plant-based protein, for forming fibrous materials from the mixture of plant-based protein. The size of apertures of the fiberizing and cooling mold 10 (namely, the discharging holes of the fiberizing and cooling mold 10) is ranged from 50 µm to 1000 µm, but not limited thereto, and the ratio of the cross-sectional area of apertures of the fiberizing and cooling mold 10 to the cross-sectional area of the pipeline (such as, the heating pipeline and/or the cooling pipeline) of the heating/cooling device 9 is ranged from 1:5 to 1:20. In some embodiments, the apertures of the fiberizing and cooling mold 10 are formed in a circular shape, a square shape or a strip shape, but not limited thereto.

The forming mold 11 is connected to the fiberizing and cooling mold 10 and is used to receive the fibrous materials from the fiberizing and cooling mold 10, so as to shape the fibrous materials according to a shape of the forming mold 11 itself, extrude out the artificial meat having the corresponding shape, and cut the extruded artificial meat according to demands.

The outlet 12 is connected to the forming mold 11 and is used to output the formed artificial meat from the forming mold 11.

In some embodiments, the pressure level that can be generated by the pressure pump 8 is related to the type of the pressure pump 8 and also the horsepower of the motor (not shown) used in the pressure pump 8. Moreover, the pressure level is also proportional to the cross-sectional area of the input pipeline of the pressure pump 8 and to the cross-sectional area of the aperture of the fiberizing and cooling mold 10, respectively. Furthermore, the forward-movement of the materials in the production machine 1 is achieved through the pressure generated by the pressure pump 8.

The conventional production machine of artificial meat composed of the twin-screw extruder requires a high power motor to drive the screw, so the average electrical energy required for producing one ton of low-end products is more than 200 kW/h while the electrical energy required for producing high-end products is several times that of the low-end products. In the present disclosure, because the production machine 1 employs the pressure pump 8 for producing the artificial meat, the electrical energy required for producing one ton of low-end products is less than 50 kW/h while the electrical energy required for producing high-end products is less than twice that of the lower-end products, so a large amount of energy can be saved. Moreover, in the conventional production machine, the production steps such as material feeding, extruding, kneading, heating and cooling only can be arranged in a straight line according to the length of the screw, so the length of the machine becomes very long, e.g., more than 19 meters, which therefore causes the volume of the conventional production machine of artificial meat to become very large. Oppositely, in the present disclosure, the pressure pump 8 is connected to the heating/cooling device 9, and the production machine 1 is arranged in a three-dimensional manner, so the occupied area and total volume of the production machine 1 are both significantly reduced, e.g., reduced to less than half of the conventional one. Furthermore, in the conventional production machine, the screw and the thread insert are both made of metal, and the rotation of the screw is necessary for providing the energy to push forward, extrude and knead the materials and also for generating heats through friction, so it is difficult in maintaining a good sealing. And, when the moisture content exceeds 20-25% and the fat content exceeds 3% in the materials, the friction force becomes too small, which may cause a slippage and even lead to a flow back of the fed materials and a failure of material feeding. Therefore, the moisture content of the artificial meat produced by the conventional production machine has difficulty in exceeding 60%. Differently, in the present disclosure, by utilizing the pressure pump 8, the pressure can achieve a high level, e.g., 60 MPa, and a good sealing can also be maintained without leakage, so not only the artificial meat produced by the production machine 1 can have the moisture content up to 80 %, but the raw materials with high contents of fat and water also can be used. Therefore, since, in the production machine 1, the limits on the type and the moisture content of the used raw materials are relatively less, the price of the raw materials for producing the artificial meat is accordingly reduced, and the variety of artificial meat produced also becomes relatively wider. In addition, the only material that can be used in the conventional production machine is the expensive isolated soybean protein, while the production machine 1 in the present disclosure which utilizes the pressure pump 8 can adapts an more economic material, such as the dehulled soybean protein, to replace the isolated soybean protein, so the production cost of the artificial meat in the present disclosure is significantly reduced.

In some embodiments, the production machine 1 further includes a heat recycling tool (not shown) disposed adjacent to the cooling pipeline of the heating/cooling device 9. The heat recycling tool is used to absorb the heats generated during the cooling process of the cooling pipeline of the heating/cooling device 9, and transfer the absorbed heats to the heating pipeline of the heating/cooling device 9 for heating.

In conclusion, the present disclosure provides a production machine of artificial meat which employs the pressure pump. Compared with the conventional production machine which employs the twin-screw extruder, the production machine of the present disclosure is advantageous of less energy consumption, small volume, low requirements on the characteristics of raw materials, and capable of producing high-moisture artificial meat products.

## Claims

1. A production machine (1), **characterized by** comprising:
a first motor (2),
a raw material mixer (3) receiving a mixture of plant-based protein and driven by the first motor (2) to stir and mix materials in the mixture of plant-based protein;
a raw material storage tank (6) communicated with the raw material mixer (3) for receiving and storing the mixture of plant-based protein which is stirred and mixed by the raw material mixer (3);
a vacuum pump (5) connected to the raw material storage tank (6) for evacuating the raw material storage tank (6);
a second motor (4) disposed adjacent to the raw material storage tank (6) for controlling a discharging speed of the mixture of plant-based protein from the raw material storage tank (6);
a raw material delivery pump (7) delivering the mixture of plant-based protein from the raw material storage tank (6);
a pressure pump (8) communicated with the raw material delivery pump (7) for receiving and pressurizing the mixture of plant-based protein from the raw material delivery pump (7);
a heating/cooling device (9) communicated with the pressure pump (8) for receiving the mixture of plant-based protein, wherein the heating/cooling device (9) heats the mixture of plant-based protein to a preset heating temperature within a preset time period and cools the mixture of plant-based protein to a preset cooling temperature;
a fiberizing and cooling mold (10) receiving and performing an extrusion operation on the mixture of plant-based protein cooled by the heating/cooling device (9), so as to form fibrous materials from the mixture of plant-based protein;
a forming mold (11) connected to the fiberizing and cooling mold (10) for receiving the fibrous materials from the fiberizing and cooling mold (10) and shaping the fibrous materials to form an artificial meat; and
an outlet (12) connected to the forming mold (11) for outputting the artificial meat.

2. The production machine (1) as claimed in claim 1, wherein a pressure applied by the pressure pump (8) is ranged from 0.1 MPa to 20 MPa.

3. The production machine (1) as claimed in claim 1 or 2, wherein the preset time period is ranged from 3 seconds to 10 seconds.

4. The production machine (1) as claimed in one of the preceding claims, wherein the preset heating temperature is ranged from 100 °C to 140 °C.

5. The production machine (1) as claimed one of the preceding claims, wherein the preset cooling temperature is ranged from 60 °C to 95 °C.

6. The production machine (1) as claimed in one of the preceding claims, wherein the materials in the mixture of plant-based protein comprise a dehulled soybean.

7. The production machine (1) as claimed in one of the preceding claims, wherein the raw material delivery pump (7) comprises a centrifugal pump, a screw pump or a hydraulic pump.

8. The production machine (1) as claimed in one of the preceding claims, wherein the pressure pump (8) comprises a gear pump, a rotary lobe pump, a screw pump or a piston pump.

9. The production machine (1) as claimed in one of the preceding claims, wherein a size of a discharging hole of the fiberizing and cooling mold (10) is ranged from 50 µm to 1000 µm.

10. The production machine (1) as claimed in one of the preceding claims, wherein a ratio of a cross-sectional area of a discharging hole of the fiberizing and cooling mold (10) to a cross-sectional area of a pipeline of the heating/cooling device (9) is ranged from 1:5 to 1:20.
